# EUROPEAN PATENT SPECIFICATION

(11) **EP 3 260 234 B1**
(45) Date of publication and mention of the grant of the patent: **31.07.2019**
(21) Application number: 17177720.4
(22) Date of filing: 23.06.2017
(51) Int. Cl.: B23Q 3/06, B21D 43/00, B21D 43/28, B23D 45/12, B23D 47/02, B23Q 7/04

(54) **MACHINE TO PROCESS SECTION BARS**
MASCHINE ZUR VERARBEITUNG VON PROFILSTÄBEN
MACHINE DE TRAITEMENT DE BARRES DE SECTION

(30) Priority: 23.06.2016 IT UA20164612
(43) Date of publication of application: 27.12.2017
(73) Proprietor: F.O.M. Industrie S.r.l., 47841 Cattolica (IT)
(72) Inventor: LATTANZI, Lorenzo, 61121 Pesaro (IT)
(74) Representative: Manconi, Stefano

(56) References cited:
- EP-A1- 2 172 301
- DE-A1- 3 823 635
- DE-C1- 3 742 175
- JP-A- H0 531 639

## Description

The present invention relates to a machine to process section bars according to the preamble of claim 1 (see for example DE 38 23 635 A1).

In the field of processing of section bars, in particular made of aluminium, light alloys, PVC or the like, it is known to provide a machine of the type comprising an elongated base, at least one processing station mounted along the base and a feeding unit designed to hold the section bar at a rear end thereof and to feed it along the base and through the processing station.

The machine further comprises two roller support devices, which are mounted in succession along the base and define a support surface for the section bars.

Each roller support device has a plurality of rollers mounted to rotate about respective rotation axes, which are substantially parallel to each other and transverse to a forward direction of the section bars along the base. Generally, the processing station is provided with a cutting device to cut the section bar into two pieces, and an operating head for milling and/or punching operations in the pieces.

During the processing carried out by the cutting device and the operating head, the section bar and the pieces are normally held by at least two vices mounted at the processing station and moving along the base.

When the section bar has a shaped cross-section, e.g. an L-shaped cross-section, and is arranged on the support surface on its thickness, the section bar is kept stable on the support surface by means of at least one clamping device to allow the cutting device and the operating head to perform the corresponding cutting, milling and/or drilling operations correctly.

The known machines to process section bars of the type described above have some drawbacks, mainly due to the fact that the clamping device has a variable configuration and is manually assembled and disassembled by the personnel depending on the geometrical characteristics of the section bars.

Consequently, the machine must be equipped with a relatively large number of clamping devices, has relatively long service times and is therefore relatively expensive. The object of the present invention is to provide a machine to process section bars that is free from the aforesaid drawbacks and is simple and inexpensive to implement. According to the present invention, it is provided a machine to process section bars as claimed in the appended claims.

The present invention will now be described with reference to the accompanying drawings, showing a non-limiting embodiment, wherein:
Figure 1 is a schematic perspective view, with parts removed for clarity's sake, of a preferred embodiment of the machine to process section bars according to the present invention;
Figure 2 is a schematic perspective view, with parts removed for clarity's sake, of a detail of the machine of Figure 1;
Figure 3 is a first schematic side view, with enlarged parts and parts removed for clarity's sake, of the detail of Figure 2; and
Figure 4 is a second schematic side view, with parts removed for clarity's sake, of the detail of Figure 2.

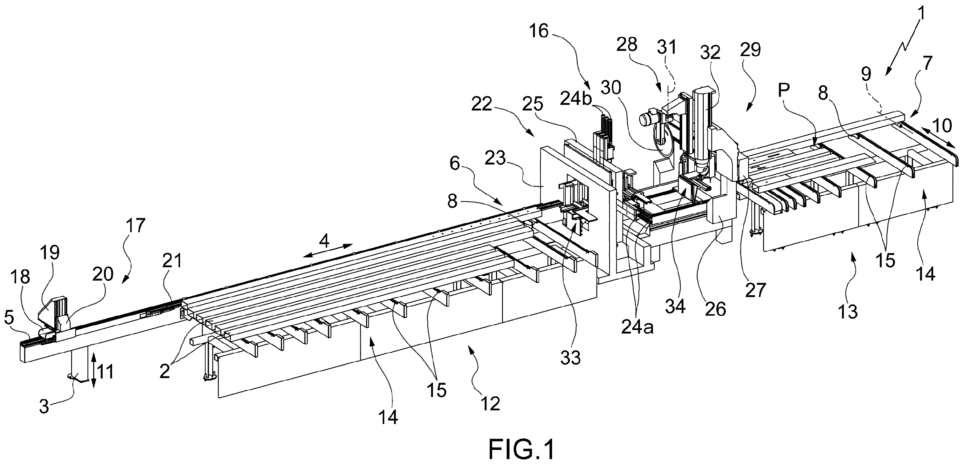

Referring to Figure 1, 1 indicates as a whole a machine to process section bars 2, in particular made of aluminium, light alloys, PVC or the like, having an elongated shape. The machine 1 comprises an elongate base 3, which extends in a horizontal direction 4 and is provided with a longitudinal guide rail 5 parallel to the direction 4.

The machine 1 further comprises two roller support devices 6, 7 mounted in succession along the base 3. Each device 6, 7 has a plurality of rollers 8, which are mounted to rotate about respective rotation axes 9, substantially parallel to each other and to a horizontal direction 10 transverse to the direction 4, and which define a support surface P for at least one section bar 2.

Each roll 8 is movable in a vertical direction 11, orthogonal to the directions 4 and 10 between a raised operating position and a lowered rest position.

The machine 1 is further provided with a loading station 12 of the section bars 2 to be processed on the device 6 and with an unloading station 13 of the section bars 2 just processed by the device 7.

Each station 12, 13 comprises a belt conveyor 14, which faces the respective device 6, 7 in the direction 10, and includes, in turn, a plurality of conveyor belts 15, which are parallel to each other and to the direction 10.

The machine 1 further has a processing station 16, which is formed along the base 3 between the stations 12, 13, and extends between the devices 6, 7.

The section bars 2 are fed along the plane P and through the station 16 in the direction 4 by a feeding device 17, comprising a first horizontal slide 18 slidably coupled to the longitudinal guide rail 5 to move straight along the longitudinal guide rail 5 in the direction 4 with respect to the base 3; a second horizontal slide 19, slidably coupled to the horizontal slide 18 to move straight in the direction 10 with respect to the horizontal slide 18; and a vertical slide 20, slidably coupled to the horizontal slide 19 to move straight in the direction 11 with respect to the horizontal slide 19.

The vertical slide 20 has an elongated shape, extends in the direction 4 and supports a holding element 21 connected to a free end of the vertical slide 20.

The element 21 is rotatably coupled to the vertical slide 20 to rotate, relative to the vertical slide 20, about an axis of rotation (not shown) parallel to the direction 4, and comprises two (not shown) jaws movable between a clamping position and a release position of the section bars 2.

The station 16 is provided with a drilling and/or milling assembly 22 comprising an annular chassis 23, which is mounted between the stations 12, 13 and extends around a feeding path of the section bars 2; and a plurality of tool spindles 24, which are mounted parallel to the directions 10 and 11, each of them being designed to receive and retain a respective drilling and/or milling tool of a known type and not shown type.

The spindles 24 are mounted on the chassis 23 by interposing a cross slide 25, which has an annular shape and is designed to allow the spindles 24 to move relative to the base 3 in the directions 10 and 11.

The spindles 24 parallel to the direction 10 (hereinafter referred to as 24a) are coupled to the cross slide 25 to move, relative to the cross slide 25, independently of one another in the direction 10; and the spindles 24 parallel to the direction 11 (hereinafter referred to as 24b) are coupled to the cross slide 25 to move, relative to the cross slide 25, independently of one another in the direction 11.

The station 16 is further provided with an overhead crane 26, which is mounted between the milling assembly 22 and the station 13 and is movable relative to the base 3 between the devices 6, 7 and the stations 12, 13 in the direction 4.

The overhead crane 26 comprises a horizontal crossbar 27, which extends above the plane P in the direction 10, supports a cutting device 28 for cutting each section bar 2 into two pieces (not shown) and further supports a drilling and/or milling device 29 to drill and/or mill the adjacent ends of the pieces (not shown).

The device 28 is provided with a circular cutting blade 30, which is mounted to rotate about its own longitudinal axis and is movable with respect to the crossbar 27 in the directions 10 and 11 and about an axis of rotation 31 parallel to the direction 11.

The device 29 is provided with a drilling and/or milling head 32 movable with respect to the crossbar 27 in the directions 10 and 11.

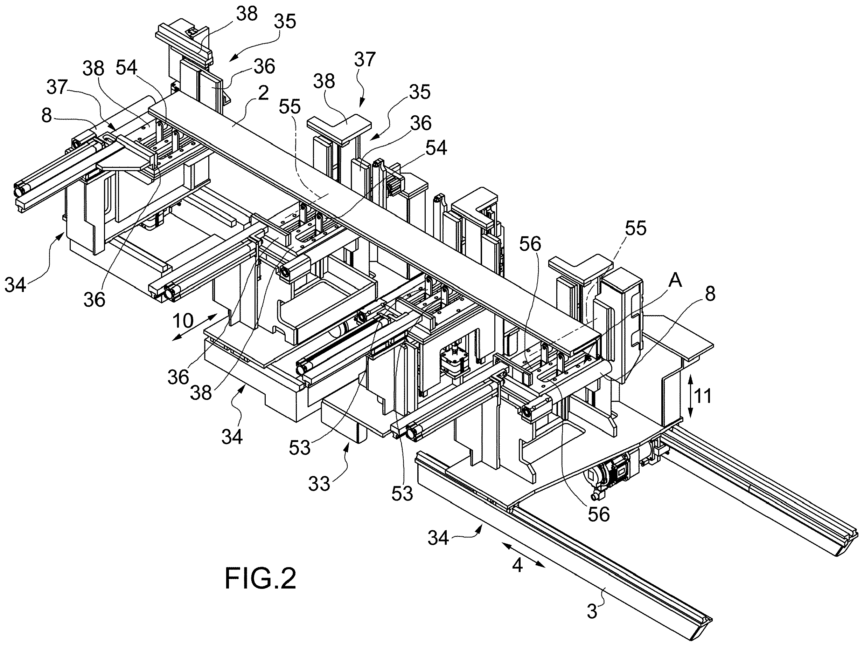

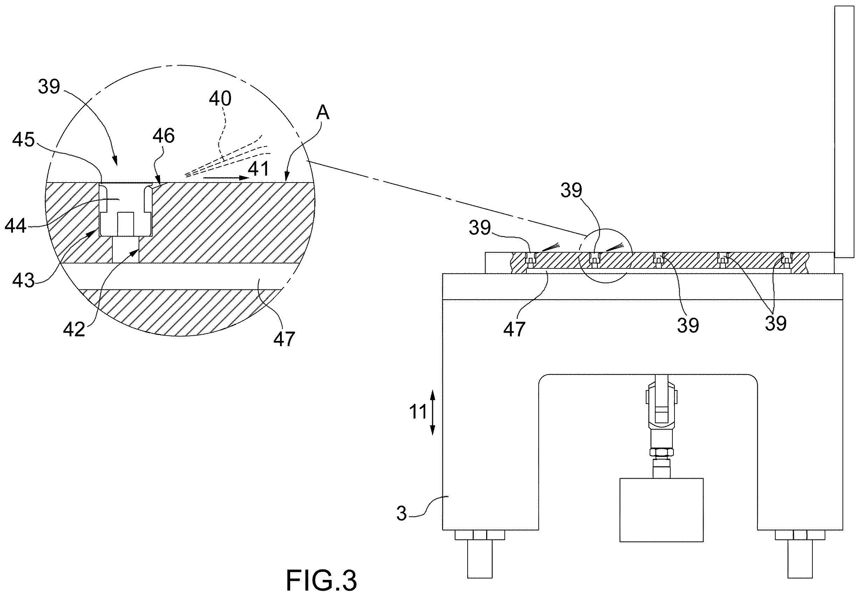

As shown in FIGS. 2 and 3, the station 16 is provided, in this case, with four holding devices 33, 34, wherein the device 33 is fixed in the direction 4 and the devices 34 are movable along the base 3 in the direction 4.

Each device 33, 34 comprises a horizontal clamping vice 35, comprising two jaws 36 perpendicular to the direction 10 and mutually movable in the direction 10 between a clamping position and a release position of at least one section bar 2.

Each device 33, 34 further comprises a vertical clamping vice 37, comprising two jaws 38 perpendicular to the direction 11 and mutually movable in the direction 11 between a clamping position and a release position of at least one section bar 2.

Each lower jaw 38 comprises a flat plate defining a support surface A for the section bars 2 and is provided with a plurality of pneumatic nozzles 39, each of which opens up outwards at the surface A and is designed to generate an air jet 40, which is sloping with respect to the surface A and has a component 41 parallel to the surface A.

The components 41 of the jets 40 allow removing from the surfaces A of the lower jaws 38 machining chips and/or scraps produced by the milling assembly 22, by the cutting device 28 and by the drilling device 29 and left on the lower jaws 38 to avoid any damage to the section bars 2 when the clamping vices 37 are in their clamping positions. Each nozzle 39 includes, in this case, a housing hole 42 provided through the relative lower jaw 38 perpendicular to the surface A; and a diffuser 43, inserted in the hole 42 and in turn comprising a narrower lower portion 44 having a diameter smaller than the one of the hole 42 and an enlarged upper portion 45 having a diameter substantially equal to the diameter of the hole 42.

Each nozzle 39 further comprises a ramp 46, which is formed on the relative lower jaw 38, is sloping with respect to the relative surface A and cooperates with the portion 45 of the relative diffuser 43 to correctly orient the respective jet 40.

The nozzles 39 of each vice 37 are pneumatically fed by a supply manifold 47, which is obtained through the lower jaw 38 and is connected to a compressed air pneumatic device (not shown).

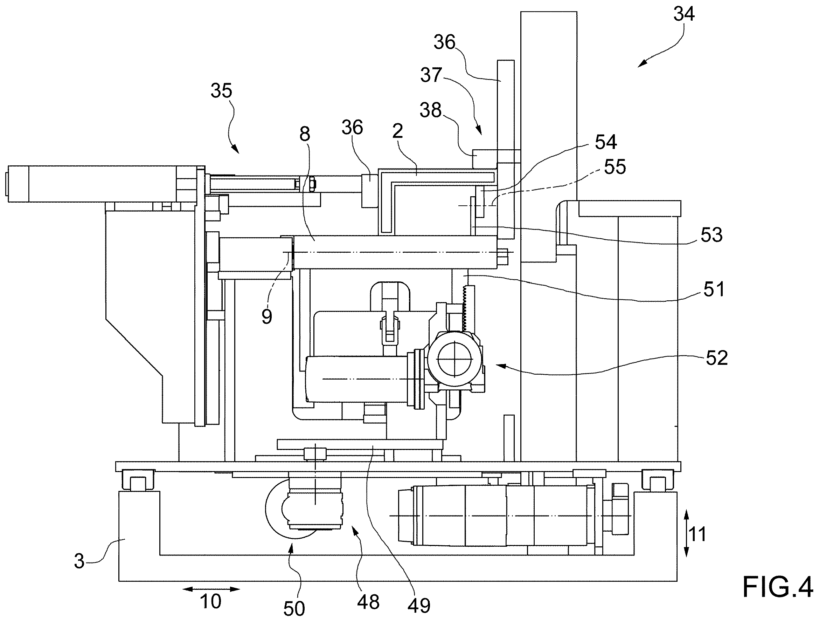

Referring to Figures 2 and 4, when the section bar 2 has a shaped form, e.g. is L-shaped, and is arranged on the surface A on its thickness (Figure 2), each device 33, 34 cooperates with a lower support device 48 comprising, in this case, a horizontal slide 49, which is mounted below the relative lower jaw 38 and is movable relative to the lower jaw 38 and under the thrust of an operating device 50 in the direction 10.

The device 48 further comprises a vertical slide 51, which extends in the direction 11 and is movable relative to the slide 49 and under the thrust of an operating device 52 mounted on the slide 49 in the direction 11.

The slide 51 has two parallel appendages 53, each of which extends in the direction 11 and is provided, in this case, with a wheel 54 mounted on the relative appendage 53 to rotate about an axis of rotation 55 parallel to the direction 10.

The wheels 54 are moved from the slide 51 in the direction 11 between a lowered rest position, in which the wheels 54 are arranged below the surface A, and a raised operating position, in which the appendages 53 extend through the relative lower jaw 38 and protrude above the surface A to support the section bar 2 on the lower side (Figure 2). When the wheels 54 move into their raised operating position, each appendage 53 slidably engages a feeding channel 56 obtained through the relative lower jaw 38 in the direction 10.

According to some variants not shown, the wheels 54 are removed and replaced with respective low-friction sliding members or with an air flotation table.

The lower support devices 48 therefore allow keeping stable the section bars 2 at the processing station 16 to ensure a proper operation of the milling assembly 22, of the cutting device 28 and of the drilling and/or milling device 29.

## Claims

1. A machine to process section bars (2), in particular made of aluminium, light alloys, PVC or the like, comprising an elongated base (3) extending in a first direction (4); at least one processing station (16), which is obtained along the base (3); at least one operating head (22), which is mounted in the processing station (16) to carry out a chip-removal machining of the section bars (2); a cutting device (30), which is mounted in the processing station (16) to cut the section bar (2) into two pieces; a first holding device (21) to hold the section bar (2) at a rear end thereof and to feed it along the base (3) in the first direction (4); and at least one second holding device (34), which is mounted in the processing station (16) to hold the section bar (2) during the processing carried out by the operating head (22) and the cutting device (30), and comprises a vertical clamping vice (37), which is provided with a lower jaw (38) and with an upper jaw (38), the lower jaw (38) comprising, in turn, a plate defining a support surface (A) for the section bar (2); and **characterized in that** the second holding device (34) is provided with a lower support member (54), which is movable between a lowered rest position, in which the support member (54) is, at the most, coplanar to the support surface (A), and a raised operating position, in which the support member (54) extends above the support surface (A) to support the section bar (2) on the lower side.

2. A machine according to claim 1, wherein the second holding device (34) further comprises a horizontal clamping vice (35), which is provided with two side jaws (36), which are movable from and to a clamping position, in which the side jaws (36) cooperate with said upper and lower jaws (38) so as to keep the section bar (2) stable during the processing of the operating head (22) and of the cutting device (30).

3. A machine according to claim 1 or 2, further comprising a first operating device (52) to move the support member (54) between its lowered rest position and its raised operating position in a second direction (11) that is perpendicular to the support surface (A).

4. A machine according to any one of the previous claims, further comprising a second operating device (50) to move the support member (54) in a third direction (10) that is parallel to the support surface (A) and transverse to the first direction (4).

5. A machine according to any one of the previous claims, wherein the lower jaw (38) has at least one feeding channel (56), which extends in a third direction (10) that is parallel to the support surface (A) and transverse to the first direction (4), and is engaged by the support member (54) following its movement into said raised operating position.

6. A machine according to any one of the previous claims, wherein the lower jaw (38) is provided with at least one pneumatic nozzle (39), which opens up outwards in the area of the support surface (A), and is designed to generate an air jet (40) having a component (41) that is parallel to the support surface (A).

7. A machine according to any one of the previous claims, further comprising an overhead crane (26), which is mounted in the processing station (16) to move along the base (3) in the first direction (4); the cutting device (30) being mounted on the overhead crane (26).

8. A machine according to any one of the previous claims, wherein the second holding device (34) is movable along the base (3) in the first direction (4).

9. A machine according to any one of the previous claims, wherein the operating head (22) is fixed in the first direction (4).

10. A machine according to any one of the claims from 1 to 8, further comprising an overhead crane (26), which is mounted in the processing station (16) so as to move along the base (3) in the first direction (4); the operating head (22) being mounted on the overhead crane (26).

11. A machine according to any one of the previous claims, further comprising a roller support unit (6, 7) defining a further support surface (P) for the section bar (2); the lower jaw (38) being movable between a raised operating position, in which the support surface (A) is coplanar to the further support surface (P), and a lowered rest position, in which the support surface (A) extends under the further support surface (P).

12. A machine according to any one of the previous claims, wherein the support member (54) is a rolling member.

13. A machine according to any one of the claims from 1 to 11, wherein the support member (54) is a sliding member.

14. A machine according to any one of the claims from 1 to 11, wherein the support member (54) is an air flotation table.

## Patentansprüche

1. Maschine zur Verarbeitung von Profilstäben (2), insbesondere aus Aluminium, Leichtlegierungen, PVC oder ähnlichem, umfassend eine längliche Basis (3), die sich in eine erste Richtung (4) erstreckt; mindestens eine Verarbeitungsstation (16), welche entlang der Basis (3) erhalten wird; mindestens einen Arbeitskopf (22), der in der Verarbeitungsstation (16) montiert ist, um eine spanentfernende Bearbeitung der Profilstäbe (2) durchzuführen; eine Schneidevorrichtung (30), welche in der Verarbeitungsstation (16) montiert ist, um den Profilstab (2) in zwei Teile zu schneiden; eine erste Haltevorrichtung (21), um den Profilstab (2) an einem hinteren Ende davon zu halten und ihn entlang der Basis (3) in die erste Richtung (4) zuzuführen; und mindestens eine zweite Haltevorrichtung (34), welche in der Verarbeitungsstation (16) montiert ist, um den Profilstab (2) während der von dem Arbeitskopf (22) und der Schneidvorrichtung (30) ausgeführten Verarbeitung zu halten, und einen vertikalen Klemmschraubstock (37) umfasst, welcher mit einer unteren Backe (38) und einer oberen Backe (38) bereitgestellt ist, wobei die untere Backe (38) wiederum eine Platte umfasst, die eine Stützfläche (A) für den Profilstab (2) definiert; und **dadurch gekennzeichnet, dass** die zweite Haltevorrichtung (34) mit einem unteren Stützelement (54) bereitgestellt ist, welches zwischen einer niedrigeren Ruheposition bewegbar ist, in welcher das Stützelement (54) größtenteils komplanar zu der Stützfläche (A) ist, und einer erhöhten Arbeitsposition, in welcher sich das Stützelement (54) über die Stützfläche (A) erstreckt, um den Profilstab (2) auf der niedrigeren Seite zu stützen.

2. Maschine gemäß Anspruch 1, wobei die zweite Haltevorrichtung (34) ferner einen horizontalen Klemmschraubstock (35) umfasst, welcher mit zwei Seitenbacken (36) bereitgestellt ist, welche von und zu einer Klemmposition bewegbar sind, in welcher die Seitenbacken (36) mit den oberen und unteren Backen (38) zusammenarbeiten, um den Profilstab (2) während der Verarbeitung des Arbeitskopfs (22) und der Schneidevorrichtung (30) zu stabilisieren.

3. Maschine gemäß Anspruch 1 oder 2, ferner umfassend eine erste Arbeitsvorrichtung (52), um das Stützelement (54) zwischen seiner niedrigeren Ruheposition und seiner erhöhten Arbeitsposition in eine zweite Richtung (11) zu bewegen, die senkrecht zu der Stützfläche (A) ist.

4. Maschine gemäß einem der vorangegangenen Ansprüche, ferner umfassend eine zweite Arbeitsvorrichtung (50), um das Stützelement (54) in eine dritte Richtung (10) zu bewegen, die parallel zu der Stützfläche (A) und diagonal zu der ersten Richtung (4) ist.

5. Maschine gemäß einem der vorangegangenen Ansprüche, wobei die untere Backe (38) mindestens einen Zuführkanal (56) hat, welcher sich in eine dritte Richtung (10) erstreckt, die parallel zu der Stützfläche (A) und diagonal zu der ersten Richtung (4) ist und von dem Stützelement (54), dessen Bewegung in die erhöhte Arbeitsposition folgend, in Eingriff genommen wird.

6. Maschine gemäß einem der vorangegangenen Ansprüche, wobei die untere Backe (38) mit mindestens einer pneumatischen Düse (39) bereitgestellt ist, welche sich nach außen hin in den Bereich der Stützfläche (A) öffnet und ausgestaltet ist, um einen Luftstrom (40) zu erzeugen, der eine Komponente (41) hat, die parallel zu der Stützfläche (A) ist.

7. Maschine gemäß einem der vorangegangenen Ansprüche, ferner umfassend einen Brückenkran (26), welcher in der Verarbeitungsstation (16) montiert ist, um sich entlang der Basis (3) in die erste Richtung (4) zu bewegen; wobei die Schneidvorrichtung (30) auf dem Brückenkran (26) montiert ist.

8. Maschine gemäß einem der vorangegangenen Ansprüche, wobei die zweite Haltevorrichtung (34) entlang der Basis (3) in die erste Richtung (4) bewegbar ist.

9. Maschine gemäß einem der vorangegangenen Ansprüche, wobei der Arbeitskopf (22) in der ersten Richtung (4) fixiert ist.

10. Maschine gemäß einem der Ansprüche von 1 bis 8, ferner umfassend einen Brückenkran (26), welcher in der Verarbeitungsstation (16) montiert ist, um sich entlang der Basis (3) in die erste Richtung (4) zu bewegen; wobei der Arbeitskopf (22) auf dem Brückenkran (26) montiert ist.

11. Maschine gemäß einem der vorangegangenen Ansprüche, ferner umfassend eine Rollenstützeinheit (6, 7), die eine weitere Stützfläche (P) für den Profilstab (2) definiert; wobei die untere Backe (38) zwischen einer erhöhten Arbeitsposition, in welcher die Stützfläche (A) komplanar zu der weiteren Stützfläche (P) ist, und einer niedrigeren Ruheposition, in welcher sich die Stützfläche (A) unter der weiteren Stützfläche (P) erstreckt, bewegbar ist.

12. Maschine gemäß einem der vorangegangenen Ansprüche, wobei das Stützelement (54) ein Rollelement ist.

13. Maschine gemäß einem der Ansprüche 1 bis 11, wobei das Stützelement (54) ein Gleitelement ist.

14. Maschine gemäß einem der Ansprüche 1 bis 11, wobei das Stützelement (54) ein Luftflotationstisch ist.

## Revendications

1. Machine pour traiter des barres de profilé (2), réalisées notamment en aluminium, alliages légers, PVC ou similaire, comprenant une base allongée (3) s'étendant dans une première direction (4) ; au moins un poste de traitement (16), qui est obtenu le long de la base (3) ; au moins une tête d'actionnement (22), qui est montée dans le poste de traitement (16) pour réaliser un usinage d'enlèvement de copeaux des barres de profilé (2) ; un dispositif de coupe (30), qui est monté dans le poste de traitement (16) pour couper la barre de profilé (2) en deux morceaux; un premier dispositif de maintien (21) pour maintenir la barre de profilé (2) au niveau d'une extrémité arrière de celle-ci et pour l'amener le long de la base (3) dans la première direction (4) ; et au moins un deuxième dispositif de maintien (34), qui est monté dans le poste de traitement (16) pour maintenir la barre de profilé (2) pendant le traitement effectué par la tête d'actionnement (22) et le dispositif de coupe (30), et comprend un étau de serrage vertical (37), qui est pourvu d'une mâchoire inférieure (38) et d'une mâchoire supérieure (38), la mâchoire inférieure (38) comprenant, quant à elle, une plaque définissant une surface de support (A) pour la barre de profilé (2) ; et **caractérisée en ce que** le deuxième dispositif de maintien (34) est pourvu d'un organe de support inférieur (54), qui est mobile entre une position de repos descendue, dans laquelle l'organe de support (54) est, au plus, coplanaire avec la surface de support (A), et une position d'actionnement relevée, dans laquelle l'organe de support (54) s'étend au-dessus de la surface de support (A) pour supporter la barre de profilé (2) sur le côté inférieur.

2. Machine selon la revendication 1, dans laquelle le deuxième dispositif de maintien (34) comprend en outre un étau de serrage horizontal (35), qui est pourvu de deux mâchoires latérales (36), qui sont mobiles depuis et vers une position de serrage, dans laquelle les mâchoires latérales (36) coopèrent avec lesdites mâchoires supérieure et inférieure (38) de façon à conserver la barre de profilé (2) stable pendant le traitement de la tête d'actionnement (22) et du dispositif de coupe (30).

3. Machine selon la revendication 1 ou 2, comprenant en outre un premier dispositif d'actionnement (52) pour déplacer l'organe de support (54) entre sa position de repos descendue et sa position d'actionnement relevée dans une deuxième direction (11) qui est perpendiculaire à la surface de support (A).

4. Machine selon l'une quelconque des revendications précédentes, comprenant en outre un deuxième dispositif d'actionnement (50) pour déplacer l'organe de support (54) dans une troisième direction (10) qui est parallèle à la surface de support (A) et transversale à la première direction (4).

5. Machine selon l'une quelconque des revendications précédentes, dans laquelle la mâchoire inférieure (38) a au moins un canal d'amenée (56), qui s'étend dans une troisième direction (10) qui est parallèle à la surface de support (A) et transversale à la première direction (4), et est mis en prise par l'organe de support (54) à la suite de son déplacement dans ladite position d'actionnement relevée.

6. Machine selon l'une quelconque des revendications précédentes, dans laquelle la mâchoire inférieure (38) est pourvue d'au moins une tuyère pneumatique (39), qui s'ouvre vers l'extérieur dans la zone de la surface de support (A), et est conçue pour générer un jet d'air (40) ayant une composante (41) qui est parallèle à la surface de support (A).

7. Machine selon l'une quelconque des revendications précédentes, comprenant en outre un pont roulant (26), qui est monté dans le poste de traitement (16) pour se déplacer le long de la base (3) dans la première direction (4) ; le dispositif de coupe (30) étant monté sur le pont roulant (26).

8. Machine selon l'une quelconque des revendications précédentes, dans laquelle le deuxième dispositif de maintien (34) est mobile le long de la base (3) dans la première direction (4).

9. Machine selon l'une quelconque des revendications précédentes, dans laquelle la tête d'actionnement (22) est fixe dans la première direction (4).

10. Machine selon l'une quelconque des revendications 1 à 8, comprenant en outre un pont roulant (26), qui est monté dans le poste de traitement (16) de façon à se déplacer le long de la base (3) dans la première direction (4) ; la tête d'actionnement (22) étant montée sur le pont roulant (26).

11. Machine selon l'une quelconque des revendications précédentes, comprenant en outre une unité de support à rouleaux (6, 7) définissant une surface de support supplémentaire (P) pour la barre de profilé (2) ; la mâchoire inférieure (38) étant mobile entre une position d'actionnement relevée, dans laquelle la surface de support (A) est coplanaire avec la surface de support supplémentaire (P), et une position de repos descendue, dans laquelle la surface de support (A) s'étend sous la surface de support supplémentaire (P).

12. Machine selon l'une quelconque des revendications précédentes, dans laquelle l'organe de support (54) est un organe roulant.

13. Machine selon l'une quelconque des revendications 1 à 11, dans laquelle l'organe de support (54) est un organe coulissant.

14. Machine selon l'une quelconque des revendications 1 à 11, dans laquelle l'organe de support (54) est une table de flottation à air.
